Europäisches Patentamt

European Patent Office

Office européen des brevets

(19)

(11) Veröffentlichungsnummer: **0 083 023**

**A2**

(12) **EUROPÄISCHE PATENTANMELDUNG**

(21) Anmeldenummer: **82111590.4**

(22) Anmeldetag: **14.12.82**

(51) Int. Cl.³: **G 01 S 15/89**

(30) Priorität: **28.12.81 DE 3151551**

(43) Veröffentlichungstag der Anmeldung:
**06.07.83 Patentblatt 83/27**

(84) Benannte Vertragsstaaten:
**DE FR NL**

(71) Anmelder: **SIEMENS AKTIENGESELLSCHAFT**
**Berlin und München Wittelsbacherplatz 2**
**D-8000 München 2(DE)**

(72) Erfinder: **Hassler, Dietrich**
**Flurweg 3**
**D-8521 Uttenreuth(DE)**

(72) Erfinder: **Köhl, Wilfried**
**Moorbachweg 3**
**D-8520 Erlangen(DE)**

(72) Erfinder: **Hönig, Dietmar**
**Hauptstrasse 1**
**D-8521 Marloffstein(DE)**

(72) Erfinder: **Schmidt, Erhard**
**Hirtenweg 4**
**D-8520 Erlangen Buckenhof(DE)**

(54) **Verfahren und Vorrichtung zum Aufzeichnen von Ultraschall-Echos.**

(57) Die Erfindung bezieht sich auf ein Verfahren zum Aufzeichnen von Ultraschall-Echos, die bei der Ultraschall-Abtastung von Objekten, z.B. des menschlichen Körpers anfallen, am Aufzeichnungsträger einer Aufzeichnungsvorrichtung, wobei neben dem Betrag des akustischen Wellenwiderstandssprunges insbesondere auch dessen Polarität erfaßbar ist, sowie auf eine Vorrichtung zur Durchführung dieses Verfahrens. Bei bekannten Vorrichtungen ist eine eindeutige Polaritätskennzeichnung nicht immer möglich. Gemäß der Erfindung werden bei einem ansonsten konventionellen Ultraschall-Abtastverfahren folgende Bedingungen eingehalten:

   a)    das Sendesignal hat einerseits eine definierte Wellenform und

   b)    das Empfangssignal wird andererseits in Abhängigkeit von der Struktur des vorgegebenen Sendesignals einer n-fachen Aufsummierung des jeweils um einen vorgegebenen Betrag verschobenen Signals unterzogen.

Mit einem solchen Verfahren läßt sich bei einem Sinus-Wellenzug als Sendesignal nur die von der positiven Halbwelle herrührende Echoantwort erfassen und gegebenenfalls eindeutig hinsichtlich der Polarität des Wellenwiderstandssprunges diskriminieren. Eine zugehörige Vorrichtung benötigt lediglich eine Einrichtung zur Verzögerung ($\tau$) und n-fachen Aufsummierung der Echosignale.

FIG 3

SIEMENS AKTIENGESELLSCHAFT          Unser Zeichen

Berlin und München                 VPA 81 P 5130  E

**Verfahren und Vorrichtung zur Aufzeichnung von Ultra-schall-Echos**

Die Erfindung bezieht sich auf ein Verfahren und eine Vorrichtung zur Aufzeichnung von Ultraschall-Echos, die bei der Ultraschall-Abtastung von Objekten, z.B. des menschlichen Körpers anfallen, am Aufzeichnungsträger einer Aufzeichnungsvorrichtung, wobei neben dem Betrag der Echosignalamplitude insbesondere auch die Polarität des echoauslösenden Wellenwiderstandssprunges erfaßbar ist.

Bei der Abtastung von Untersuchungsobjekten mit Ultraschall, insbesondere auch des menschlichen Körpers, ergeben sich in Abhängigkeit von unterschiedlichen akustischen Wellenwiderständen im Untersuchungsobjekt unterschiedliche Echokonfigurationen. Basisuntersuchungen speziell über den akustischen Wellenwiderstand von biologischen Geweben haben gezeigt, daß eine ausreichend feste Zuordnung von Wellenwiderständen und Gewebearten existiert. Krankhafte Veränderungen des Gewebes führen auch zu Veränderungen der akustischen Widerstände und damit zu Veränderungen der Reflexionsfaktoren. Herkömmliche Impuls-Echo-Systeme setzen bisher Ultraschall-Echo-Signale nur hinsichtlich des Betrages der Amplitude des Echosignals in Bildinformation um. Richtung oder Polarität des Echosignals bzw. des Wellenwiderstandssprunges, die noch tiefergehende diagnostische Gewebedifferenzierungsmöglichkeiten gewährleisten würden, wurden bisher zur Umwandlung oder Beigabe nur ver-suchsweise eingesetzt.

Wht 5 Rl / 18.12.1981

Aus der DE-PS 28 30 621 ist ein Verfahren für obigen Zweck bekannt, bei dem aus den anfallenden Echosignalen die jeweils erste Halbwelle diskriminiert wird, die Polarität der so diskriminierten Halbwelle ermittelt und in Abhängigkeit von der ermittelten Polarität das jeweilig zugehörige Echosignal am Aufzeichnungsträger in unterschiedlicher Weise markiert wird. Darüber hinaus ist es aus der DE-PS 29 19 381 auch bekannt, für den gleichen Zweck die anfallenden Echosignale in ihrer Kurvenform mit der Kurvenform eines Normsignals, das dem Echo an einem technischen Reflektor entspricht, zu vergleichen, die durch den Kurvenformvergleich ermittelte gleichartigen Polaritäten einander zugeordneter Signalanteile im Echosignal und dem Normsignal zu selektieren und in Abhängigkeit von den selektierten Polaritäten das jeweils zugehörige Echosignal am Aufzeichnungsträger in unterschiedlicher Weise zu markieren.

Es hat sich gezeigt, daß beide Verfahren bei technischen Ultraschall-Echo-Prüfmethoden von Werkstücken mit eindeutigen Grenzflächen sehr gut verwendbar sind; bei lebendem Gewebe werden die gestellten Forderungen jedoch noch nicht optimal erfüllt. Untersuchungen ergaben, daß bei sich überlappenden Echosignalen von dicht nebeneinanderliegenden Reflektoren - wie im Gewebe eines menschlichen Körpers - keine eindeutigen Aussagen möglich sind. Es wären also weitere Verbesserungen im Meßverfahren wünschenswert.

Es existiert auch ein älterer Vorschlag aus der DE-OS 25 02 818, die Polaritätserkennung von Ultraschall-Echo-Signalen durch Integration bereits dadurch zu ermöglichen, daß eine bestimmte Zeitfunktion für den Sendevorgang vorgeschrieben wird. Damit soll insbesondere ein Impedanz-Abbild des Untersuchungsobjektes, das als "RAYLOGRAMM" bezeichnet wird, erzeugt werden. Daneben wird mit der DE-OS 26 57 899 vorgeschlagen, bei der Bildsignalverarbeitung vom Zeit- in den Frequenzraum überzugehen. Es müssen aber bei dem dort beschriebenen Verfahren umfangreiche mathematische Operationen ausgeführt werden, so daß eine schaltungstechnische Realisierung insgesamt vergleichsweise kompliziert ist.

Letzteres Verfahren hat sich für eine Bilddarstellung von lebenden Gewebe bisher nicht durchgesetzt; in der Praxis werden nach wie vor lediglich die Beträge der Signalamplituden als Bildinformation ausgewertet.

Der Erfindung liegt daher die Aufgabe zugrunde, ein verbessertes Verfahren und eine zugehörige Vorrichtung anzugeben, mit dem im Rahmen der konventionellen Ultraschall-Echotechnik insbesondere auch die Polaritätserkennung als zusätzliche Information mit geringem Aufwand eindeutig gemacht und gegebenenfalls aufgezeichnet werden kann.

Die Aufgabe wird erfindungsgemäß dadurch gelöst, daß
  a) das Sendesignal einerseits eine definierte Wellenform hat und
  b) das Empfangssignal andererseits in Abhängigkeit von der Struktur des vorgegebenen Sendesignals einer n-fachen Aufsummierung des jeweils um einen vorgegebenen Betrag verschobenen Signals unterzogen wird.

Obwohl das angegebene Verfahren in erster Linie für die Polaritätskennzeichnung des Wellenwiderstandssprunges vorgesehen ist, kann mit der Erfindung auch die normale B-Bilddarstellung durch Helligkeitsmodulation aufgrund der Echosignalamplituden verbessert werden.

Bei der Erfindung ist die Verschiebung der Signale kleiner oder gleich der halben Signalperiode des Sendesignals oder der Empfangsechos von einer ebenen Grenzfläche. Dabei kann als Sendesignal ein solches Signal verwendet werden, dessen einfaches oder zweifaches zeitliches Integral einen unipolaren Impuls ergibt. Besonders günstige Verhältnisse bezüglich der Rekonstruktion ergeben sich bei einer Wellenform, die einem einzigen Sinud-Wellenzug entspricht, oder auch bei der Subtraktion zweier um T/2 gegeneinander zeitlich verschobener Wellenzüge (W-Form).

Eine Vorrichtung zur Durchführung des erfindungsgemäßen Verfahrens ist dadurch gekennzeichnet, daß die Auswerteschaltung wenigstens eine Einrichtung zum Aufsummieren von n um ein einen vorgegebenen Wert $(0 < \tau \leq T/2)$ gegeneinander verzögerten Echosignalen aufweist.

Die Erfindung geht von mathematisch-physikalischen Systembetrachtungen aus, die zeigen, daß zur eindeutigen Erfassung der Polaritätssprünge der akustische Sendeimpuls unipolar sein müßte; allerdings ist dies praktisch nicht als Schallereignis realisierbar. Es kann aber beispielsweise ein Sinus-Wellenzug durch wiederholtes Aufsummieren des beispielsweise um jeweils T/2 wiederholt verschobenen Wellenzuges als zwei diskrete Unipolarimpulse verschiedener Polarität dargestellt werden, die so weit auseinanderliegen, daß der zweite Impuls ausgeblendet werden kann. Grundsätzlich gilt nun bei der Behandlung der Sende- bzw. Empfangssignale das lineare Superpositionsgesetz.

Der Erfindung lag nun insbesondere die Erkenntnis zugrunde, daß es zulässig ist, bei Vorhandensein eines Sendesignales vorgegebener Impulsstruktur die Echosignale ebenfalls als eine überlagerte Antwort auf unipolare Sendesignale unterschiedlicher Polarität aufzufassen. Mit Hilfe der oben erwähnten Vielfachaddition
der Signale werden die auf polaritätsmäßig unterschiedliche Sendesignale zurückgehenden Signalanteile
zeitlich separiert, so daß ein einzelner Anteil als
Antwort auf ein einziges unipolares Sendeereignis
herausgenommen werden kann. Aus der Struktur eines
Echosignals kann unter diesen Voraussetuungen eine
eindeutige Aussage über die Polarität des Wellenwiderstandssprunges gemacht werden.

Eine erfindungsgemäße Vorrichtung benötigt daher im Ergebnis lediglich eine der Struktur des Sendeimpulses
angepaßte Anzahl von Einrichtungen zur Aufsummierung,
wobei ein damit aufbereitetes Echosignal gegebenenfalls
nach der Polarität ausgewertet wird. Das B-Bild, dem
die Polaritätsinformation zugeführt wird, kann entweder in konventioneller Weise mit schmalbandigen Impulsen erzeugt worden sein oder es kann der Betrag
der nach dem erfindungsgemäßen Verfahren rückgefalteten
Echosignale in Helligkeitsmodulation umgesetzt werden.
Bei letzterer Methode empfiehlt es sich nach dem in
der DE-PS 27 24 437 genannten Verfahren eine frequenzabhängige Tiefenausgleichsverstärkung vorzunehmen, um
tiefenabhängige Verluste an Querauflösung - bedingt
durch die Tiefpaßfilterungswirkung des Gewebes - im
Zusammenwirken mit der nach dem erfindungsgemäßen Verfahren notwendigen größeren Bandbreite des Verstärkers
zu tieferen Frequenzen hin auszugleichen.

Eine Einrichtung bz. Vielfachaddition kann als Analogschaltung aufgebaut sein; die damit ausgeführte Funktion
kann aber auch software-mäßig realisiert werden.

Weitere Einzelheiten der Erfindung ergeben sich aus
der nachfolgenden Figurenbeschreibung von Ausführungsbeispielen in Verbindung mit den Unteransprüchen.

Es zeigen:

die Fig. 1, 2 und 8 Diagramme mit Signalverläufen zur Erläuterung des erfindungsgemäßen Verfahrens,

die Fig. 3 schematisch die verwendete Summationseinrichtung,

die Fig. 4 und 5 erfindungsgemäß ausgebildete Vorrichtungen für zwei verschieden definierte Ultraschall-Sendeimpulse,

die Fig. 6 schaubildmäßig den Bildaufbau aus einzelnen Zeilen und Tiefenbereichen,

die Fig. 7 eine erste Ausführungsform einer realisierbaren Summationsvorrichtung und

die Fig. 9 eine zweite Ausführungsform einer realisierbaren Summationsvorrichtung.

In der Beschreibung wird ein Sinus-Wellenzug als solches Signal definiert, das bei einfacher Integration einen Unipolarimpuls ergibt; ein W-förmiger Wellenzug wird als solches Signal definiert, das bei zweifacher Integration einen Unipolarimpuls ergibt.

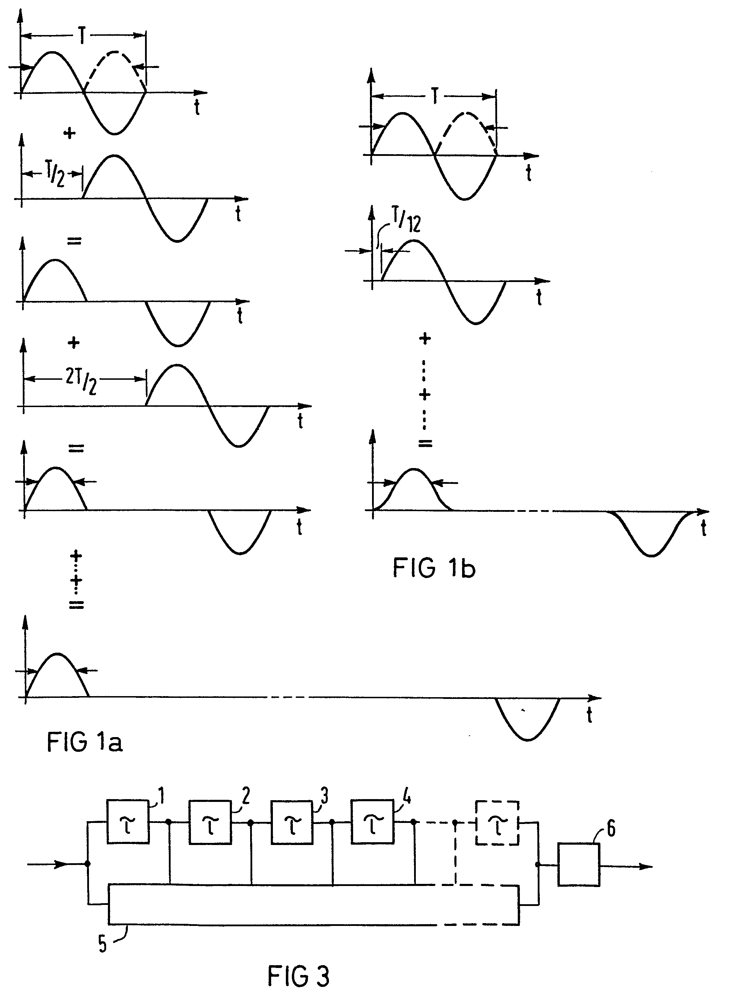

In der Figur 1a ist ein Ultraschall-Signal als Sinus-Wellenzug dargestellt. Dieses Diagramm  zeigt, daß durch eine n-fache Aufsummation der jeweils um T/2 verschobenen Sinus-Wellenzüge zwei Unipolarimpulse als Sinus-Halbwellen generierbar sind. Wenn man davon ausgeht, daß in der herkömmlichen Technik durch Gleichrichtung und Filterung ein Unipolarsignal mit der doppelten Basis- und Halbwertsbreite entsteht, so ist jetzt eine Pulsverkürzung und damit eine Verbesserung der Längsauflösung um mindestens den Faktor zwei erreicht.

Wenn ein Sendesignal von der idealen Sinus-Wellenform abweicht, entsteht bei Verschiebung um T/2 und Vielfachaddition zwischen den beiden separierten Teilsignalen ein Störsignal. Aus dem Verhältnis der Amplitude des Unipolarimpulses und dem Störsignal läßt sich ein Störabstand in dB definieren.

Die Generierung der Unipolarimpulse ist in der Figur 1 für zwei verschiedene Bedingungen $\tau = T/2$ und $\tau = T/12$ im einzelnen dargestellt: Dabei gilt für $\tau = T/2$ bezüglich der Auflösung das oben Gesagte; wenn man dagegen die Wellenzüge jeweils mit weniger als $\tau = T/2$, beispielsweise um $\tau = T/12$ verschiebt, so entstehen nach entsprechend häufigerer Aufsummierung ebenfalls unipolare Impulse im vergleichbaren zeitlichen Abstand wie in Figur 1a; je kleiner $\tau$ ist, desto größer wird jedoch die Halbwertsbreite der Impulse. Dem damit verbundenen Verlust an Längsauflösung eines Echosystems steht ein Vorteil bezüglich stärkerer Unempfindlichkeit hinsichtlich Kurvenverzerrungen gegenüber. Der Abstand zwischen Nutzsignal und Störsignal, d.h. der Störabstand ist um so kleiner, je kleiner $\tau$ ist. Für die Grenzbedingung von $\tau \Rightarrow 0$ und $n \Rightarrow \infty$ verschiebt sich der hintere Unipolarimpuls ins Unendliche und die erzeugte Kurvenform des Unipolarimpulses entspricht dann derjenigen einer zeitlichen Integration.

Obige Überlegungen können auch auf ein Echosignal angewendet werden. Das in Figur 1a dargestellte Signal läßt sich beispielsweise als Antwortsignal eines ebenen Reflektors auf einen sinusförmigen Sendeimpuls verstehen, welcher ganz entsprechend nach n-facher Aufsummierung aus zwei voneinander trennbaren Anteilen zusammengesetzt ist. Der zweite Signalanteil kann nach hinreichender Separation, d.h. genügender Anzahl von Aufadditionen, unterdrückt werden.

Durch geeignete Wahl des Parameters $\tau$ kann je nach Annäherung der abgestrahlten Druckpulswellenform an die ideale Wellenform, z.B. Einzelsinus, ein Optimum gefunden werden, und zwar derart, daß bei vorgegebenem Störabstand die geringst mögliche Halbwertsbreite der Unipolarimpulse, d.h. eine optimale Längsauflösung, erreicht wird. Die Zahl n der Aufadditionsschritte n wird dann so gewählt, daß die zeitliche Distanz zwischen den separierten Signalanteilen so groß ist, daß sich keine Überlappungen ergeben. Betrachtet man das einer Linie im B-Bild entsprechende Signal, so hat dies die zeitliche Dauer

$$\tau_{max} = \frac{z_{max}}{c/2} \quad mit \begin{cases} z_{max} : \text{maximale Eindringtiefe} \\ c \quad : \text{Schallgeschwindigkeit} \end{cases}$$

Die Separation zwischen den Signalen muß also wenigstens $\tau_{max}$ erreichen, woraus sich die Zahl n der Additionen folgendermaßen errechnet:

$$n = \frac{\tau_{max}}{\tau} + T$$

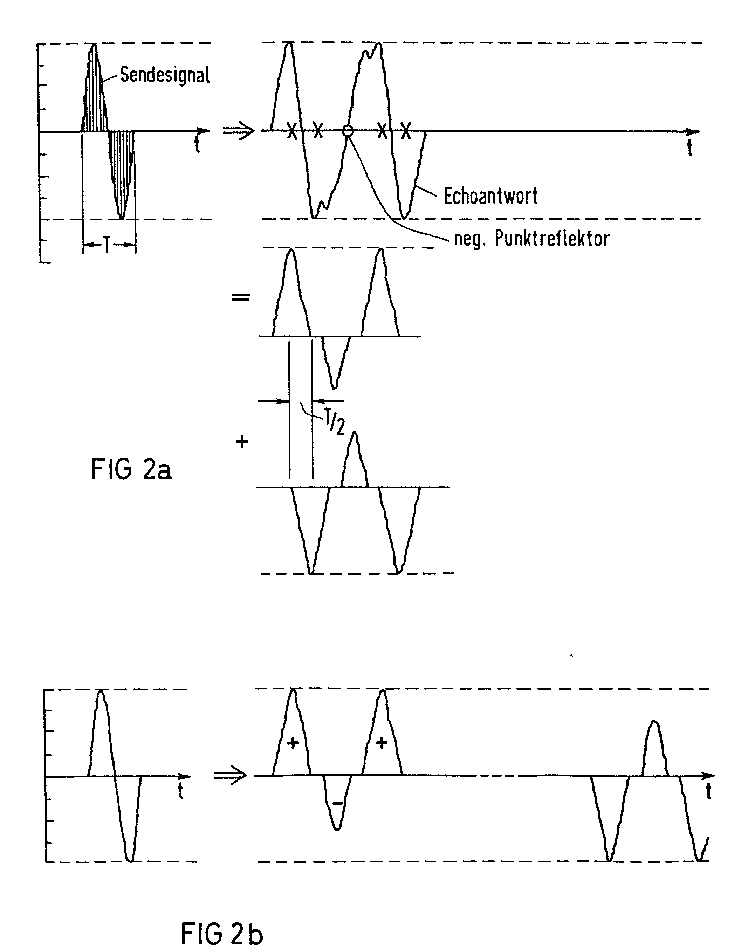

In der Figur 2a ist ein Sinus-Wellenzug mit der Periode T als Sendesignal mit einem zugehörigen Echosignal dargestellt, welches durch fünf in einer Reihe hintereinander liegende Punktreflektoren erzeugt wird. Dabei kennzeichnen die Kreuze Reflektoren mit positivem Reflexionsfaktor und der Kreis einen Reflektor mit negativem Reflexionsfaktor, welcher zwischen den ersten Reflektoren liegt. Aus der Impulsechoantwort erkennt man, daß die Polaritätssprünge nicht ohne weiteres erkennbar sind. Unter der Voraussetzung einer linearen Superposition läßt sich das vorhandene Impulsecho allerdings aus zwei Teilechosignalen der beiden Halbwellen des Sinus-Wellenzuges mit gegensätzlicher Polarität verstehen. Dies ist in den beiden darunterliegenden Zeilen aufgetragen. Das heißt also, daß aus jeder Teilantwort eindeutig zwischen Reflektoren mit positiven oder negativen Reflexionsfaktoren unterschieden werden kann.

In der Abbildung 2b ist nun die gleiche Signalkonfiguration nach n-facher Aufsummierung dargestellt. Die beiden Signalanteile sind deutlich voneinander getrennt, wobei nun der zweite Impulsanteil ausgeblendet werden kann. Das erste Teilsignal kann dann zur eindeutigen Polaritätsbestimmung herangezogen werden.

Was anhand der Figuren 1 und 2 für einen Sinus-Wellenzug gezeigt wurde, gilt bei zweimaliger Anwendung der Vielfachaddition auch für einen W-förmigen Wellenzug. In Verallgemeinerung läßt sich dies auch auf solche Sendesignale übertragen, die durch N-fache Differentiation nach der Zeit aus einem Unipolarimpuls entstanden sind. In diesem Fall ist die Vielfachaufaddition N-mal durchzuführen.

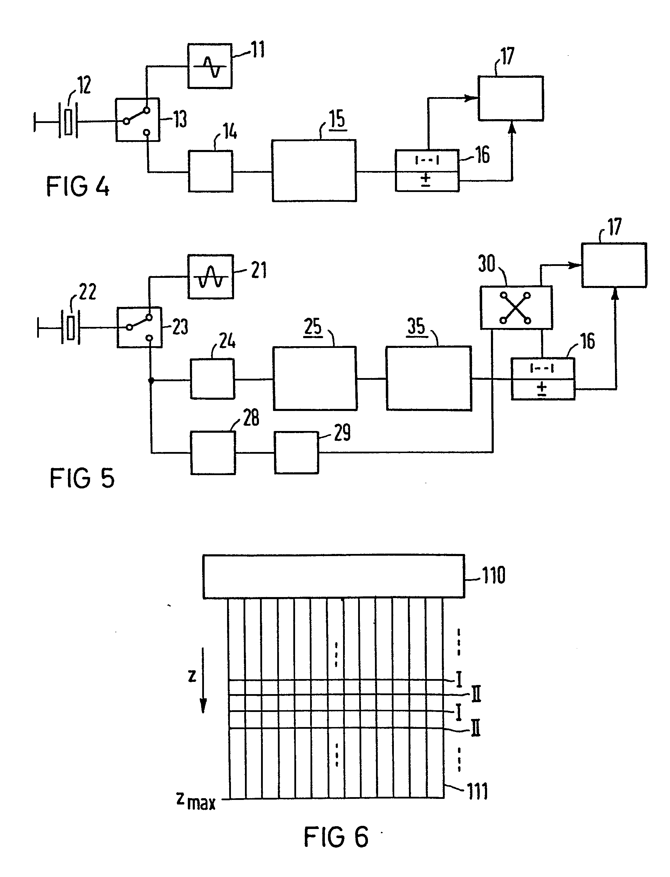

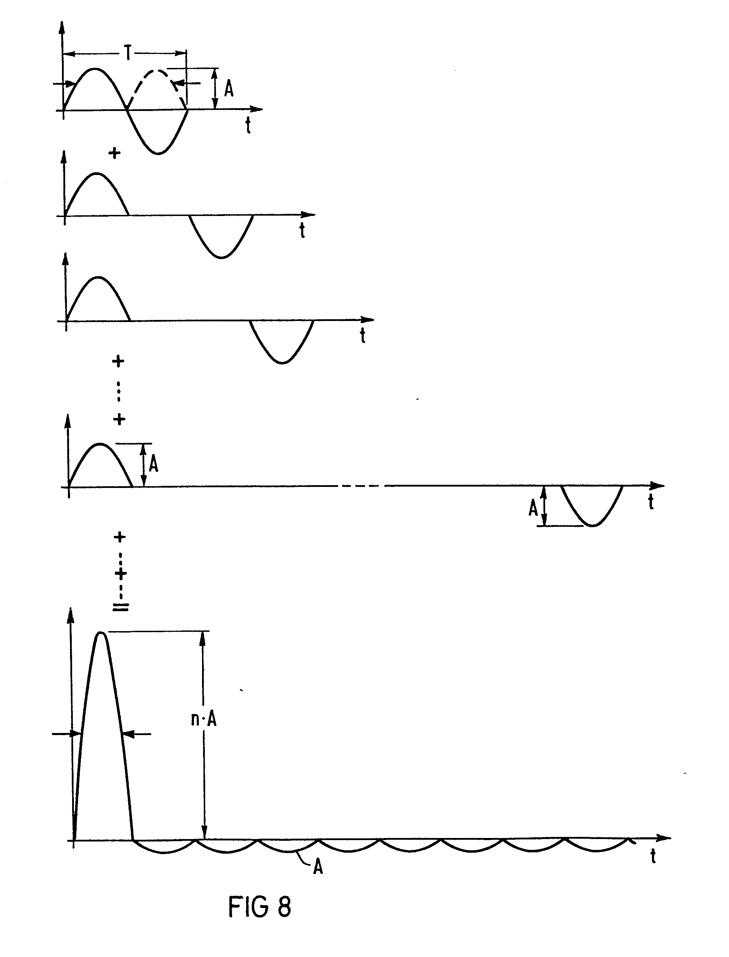

In der Figur 3 sind in einer Signalleitung n Verzögerungsglieder in Serie geschaltet, wovon die ersten vier mit den Bezugszeichen 1 bis 4 gekennzeichnet sind. Die Verzögerungsglieder 1 bis 4 für die jeweilige Verzögerung $\tau$ sind an den Zwischenabgriffen der Kettenschaltung mit einem gemeinsamen Summationsglied 5 verbunden.
Bezugszeichen 6 kennzeichnet ein Tor, das eines der
beiden Teilsignale durchläßt.  Für den praktischen Betrieb ist eine solche Schaltung derart gesteuert, daß
jeweils erst nach Leerlaufen der Verzögerungsglieder
Signale erneut aufsummiert werden.

Die schaltbildmäßige Anordnung der Figur 3 entspricht
der Struktur eines nichtrekursiven Digitalfilters; dieses         Teilproblem läßt sich daher auch software-mäßig
lösen.

Die anhand der Figur 3 beschriebene Summationseinrichtung
ist jeweils in den Schaltungsaufbau eines konventionellen
Ultraschall-Gerätes gemäß den Figuren 4 und 5 eingebaut.
Dabei realisiert Figur 4 den Schaltungsaufbau für einen
Sinus-Wellenzug als Sendesignal und Figur 5 für einen
W-förmigen Wellenzug als Sendesignal. Beide Figuren sind
nachfolgend gemeinsam beschrieben:

Von einem elektrischen Signalgenerator 11 bzw. 21 wird
ein Ultraschall-Wandlersystem 12 bzw. 22 derart angeregt, daß ein Sinus- oder W-Wellenzug-Schallimpuls abgestrahlt wird. Das elektrische Signal zur Erzeugung
eines solchen Druckimpulses wird unter Umständen anders
aussehen und ist speziell auf das Zeitverhalten bzw.
den Frequenzgang des Wandlers ausgelegt. Mittels eines
Schalters 13 bzw. 23 wird auf jeweiligen Sende- bzw.
Empfangsbetrieb des Ultraschall-Wandlersystems umgeschaltet. Auf der Empfangsseite ist in die Empfangsleitung jeweils eine Einheit 14 bzw. 24 zur tiefenabhängigen, zeitkontrollierten Verstärkung (TGC) eingeschaltet. Die Verstärker 14 und 24 können speziell einen
solchen frequenzabhängigen Tiefenausgleich beinhalten,
wie er insbesondere in der DE-PS 27 24 437 beschrieben ist. Dem Verstärker 14 bzw. 24 ist eine Einrichtung 15 bzw. 25 zur Aufbereitung der Echosignale im oben beschriebenen Sinne nachgeschaltet. Die spezielle Struktur dieser Einrichtungen 15 bzw. 25 zur Aufsummierung wird weiter unten im einzelnen erläutert.

In der Fig. 4 ist der Einheit mit Summationseinrichtung 15 eine Einheit 16 nachgeschaltet, mit der die Amplitude einerseits und die Polarität des Widerstandssprunges andererseits diskriminiert wird. Von dort wird in üblicher Weise ein Sichtschirm einer Oszillographenröhre oder ein Aufzeichnungsträger eines anderen Aufzeichnungsgerätes für die B-Bild-Darstellung angesteuert. Insbesondere für die Oszillographendarstellung bewirken die Ausgangssignale der Einheit 15 die Modulation der Bildhelligkeit, während die abgetrennte Information über die Polarität des Wellenwiderstandssprunges beispielsweise zur Farbgebung des helligkeitsmodulierten Bildes herangezogen wird.

Prinzipiell gleiches wird in der Fig. 5 mit den Einheiten 26 und 27 ausgeführt. Zwischen den Einheiten 25 und 26 ist aber eine zweite Einheit mit Summationseinrichtung 35 angeordnet. Die Summationseinrichtung 35 entspricht im Aufbau der Summationseinrichtung 25. Durch die Hintereinanderschaltung der beiden Summationseinrichtungen 25 und 35 ist dem W-förmigen Wellenzug als Sendesignal Rechnung getragen.

In der Fig. 5 ist auch eine weitere Möglichkeit zur Bilddarstellung ausgeführt: Die Einheit 28 stellt einen konventionellen Tiefenausgleichsverstärker mit Bandbegrenzung zu tiefen Frequenzen dar, der ein Gleichrichter 29 nachgeschaltet ist, dessen Ausgangssignal über einen Schalter 30 wahlweise alternativ zum Ausgangssignal der Einheit 26 die Helligkeit der Anzeigevorrichtung 27 steuert. Damit sind hier drei verschiedene Möglichkeiten der Bildgabe möglich: Es kann sowohl 1. die herkömmliche B-Bild-Darstellung als auch 2. diese in Überlagerung mit Polaritätsinformation oder 3. eine Bilddarstellung entsprechend Fig. 4 gewählt werden. Der Verstärker 24 bzw. auch 14 unterscheidet sich von einem konventionellen Verstärker durch eine größere Bandbreite zu tieferen Frequenzen.

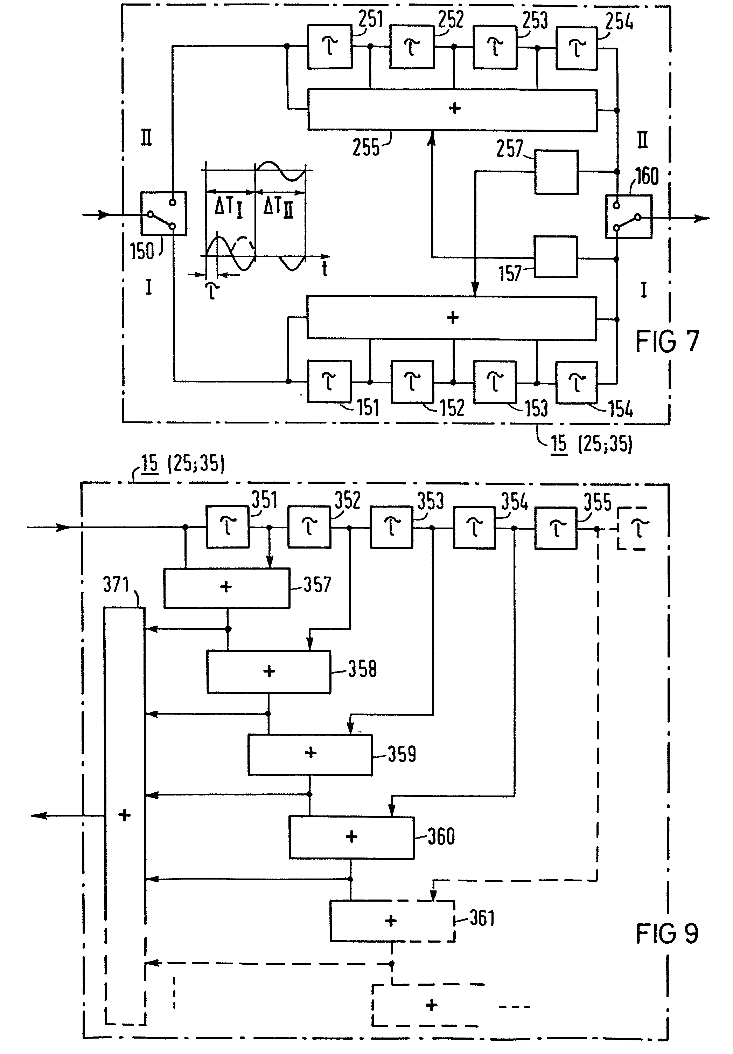

In der Fig. 6 ist schematisch der Aufbau eines Ultraschall-B-Bildes dargestellt, was das Verständnis der nachfolgenden Fig. 7 erleichtern soll: Das Bezugszeichen 110 kennzeichnet ein als "Array" ausgebildetes Ultraschall-Empfangs-/Wandler-System und 111 das Untersuchungs- bzw. Darstellungsfeld; mit z ist die Laufkoordinate der Ultraschall-Strahlen bezeichnet. Eingezeichnet sind die Ultraschall- oder Bild-Zeilen, welche in Tiefenabschnitte unterteilt sind. Diese Tiefenabschnitte (horitzontale Linien in Fig. 6) sind alternierend mit den Bezugszeichen I und II gekennzeichnet. Die Rekonstruktion der den Tiefenabschnitten entsprechenden Echosignale wird anhand des Schaltbildes der Fig. 7 erläutert: In der Fig. 7 bedeutet 150 einen Schalter, der die Eingangsleitung alternierend zwischen den Tiefenbereichen I und II umschaltet. Im Bereich I wird das Echosignal auf eine erste Signalleitung mit einer Kette von Verzögerungsgliedern 151 bis 154 und zugehöriger Addiereinheit 155 gegeben. Eine entsprechende Anordnung von Verzögerungsgliedern 251 bis 254 sowie Addiereinheit 255 ist in einer zweiten Signalleitung geschaltet, auf die die Echosignale im Bereich II umgeschaltet werden. Die Ausgangsleitungen werden entsprechend den Untersuchungsbereichen I und II über einen Schalter 260 in Koinzidenz zum Schalter 150 wieder zusammengeführt.

Mit der in Fig. 7 beschriebenen Schaltung lassen sich also die den Tiefenbereich I und II entsprechenden Signalabschnitte im Wechselpufferprinzip alternierend aufbereiten. Dabei sind die Ausgangsleitungen jedes Leitungszweiges jeweils mit dem anderen Additionsglied verbunden: Wenn die Verzögerungsglieder 151 bis 154 bzw. 251 bis 254 eine Gesamtverzögerungszeit von $\Delta T_I$ bzw. $\Delta T_{II}$ ergeben, dann entsprechen die zugehörigen Tiefenabschnitte:

$$Z_I = c/2 \cdot \Delta T_I$$

bzw.

$$Z_{II} = c/2 \cdot \Delta T_{II}$$

wobei c die Schallgeschwindigkeit bedeutet.

Bei alternierender Umschaltung erfolgen diese Signalperioden I und II lückenlos aufeinander. Auf diese Weise kann mit einer im Vergleich zu Fig. 3 weniger aufwendigen Aufaddierschaltung gearbeitet werden. Die Signalanteile, die nach einem Signalabschnitt aus der Verzögerungskette herauslaufen, werden in den Einheiten 157 bzw. 257 nach Abschwächung um einen vorgegebenen Faktor, beispielsweise durch Multiplikation mit dem Multiplikator 0,9, dem jeweils anderen Addierglied aufgeschaltet. Durch diese Abschwächung wird erreicht, daß z.B. ein von einer Störung hervorgerufenen Gleichstromanteil nach einer bestimmten Anzahl von Zeitabschnitten $\Delta T_I + \Delta T_{II}$ auf einen ausreichend niedrigen Wert abgeklungen ist. Dies entspricht einer Hochpaßfilterung der Ortsfrequenzen im Bild.

In Fig. 1 war gezeigt worden, daß durch n-fache Aufaddition eines jeweils um $\tau = T/2$ bzw. T/12 verschobenen Sinus-Wellenzuges zwei separierbare Uni-

- 14 -     VPA 81 P 5130  E

polarimpulse erzeugt werden können. Wenn man für i = 1, 2, ... n die jeweils erzeugten Signale noch einmal gemeinsam aufsummiert, so ergibt sich ein Unipolarimpuls von vergleichsweise hoher Amplitude (entsprechend der n-fachen Ausgangsamplitude) mit einem gegenüber dieser Amplitude vergleichsweise geringen Untergrundrauschen (entsprechend der einfachen Amplitude). Mit einer derartigen Teilsummen-Addition ist also ebenfalls die Möglichkeit einer Unipolarimpuls-Generierung gegeben, welche den Vorteil hat, mit einer geringeren Anzahl von Verzögerungseinheiten als in der Figur 3 beschrieben auszukommen.

Eine entsprechende Einrichtung für die Teilsummen-Addition zeigt die Figur 9: Die Bezugszeichen 351 bis 355 kennzeichnen hier Einheiten zur Signalverzögerung $\tau$, denen jeweils erste Summationsglieder 357 bis 361 zugeordnet sind. Die so gebildeten Zwischensummen werden zusammen über eine weitere, gemeinsame Summationseinheit 371 verknüpft.

Nähere    Untersuchungen haben gezeigt, daß etwa 100 Verzögerungsglieder hinreichend sein können. Dies ist gegenüber der Figur 3, bei der zur Separierung der Signalanteile eine große Zahl von Verzögerungsgliedern benötigt werden, vergleichsweise günstig. Geht man in einem Beispiel von einer Ultraschall-Frequenz mit 2 MHz aus, so wurden 5760 Verzögerungsglieder bei einer Verzögerungszeit um $\tau$ = T/12 und einer erwünschten Eindringtiefe von 18 cm bei dem Beispiel nach Figur 3 nötig sein. Demgegenüber ist die Reduzierung auf ca. 100 Verzögerungsglieder gemäß Fig. 9 eine erhebliche technische Vereinfachung.

Anhand der Beschreibung der Figuren 1 bis 9 wurde gezeigt, daß mit dem beschriebenen Verfahren und der zugehörigen Vorrichtung insbesondere eine Möglichkeit zur genauen Polaritätserfassung gegeben ist, wobei auch bei eng zusammenliegenden Reflektoren noch Aussagen über den Verlauf des Wellenwiderstandes des untersuchten Objektes gemacht werden können. Darüber hinaus ergeben sich in bestimmten Fällen beim erfindungsgemäßen Verfahren und zugehöriger Vorrichtung auch Verbesserungen für die normale Ultraschall-Bilddarstellung, da das verwendete Sendesignal breitbandig und der verwendete TGC-Verstärker eine entsprechend ausgelegte Bandbreite für tiefe Frequenzen aufweist. Untersuchungen haben gezeigt, daß sich insbesondere bei rauhen Strukturen und schräger Schalldurchstrahlung verbesserte Abbildungsverhältnisse ergeben können.

Insgesamt ergeben sich durch das erfindungsgemäße Verfahren besonders günstige Verhältnisse hinsichtlich der Anpaßbarkeit an die jeweils vorliegenden technischen Gegebenheiten. Es kann ein um so kürzerer Unipolarimpuls erzeugt und damit um so mehr Längsauflösung zugewonnen werden, je besser der abgestrahlte Druckpuls an die Idealform, z.B. eines Sinus-Wellenzuges, angepaßt werden kann.

9 Figuren
16 Patentansprüche

Patentansprüche

1. Verfahren zum Aufzeichnen von Ultraschall-Echos, die bei der Ultraschall-Abtastung von Objekten, z.B. des menschlichen Körpers anfallen, am Aufzeichnungsträger einer Aufzeichnungsvorrichtung, wobei neben dem Betrag der Echosignalamplituden insbesondere auch die Polarität des echoauslösenden Wellenwiderstandssprunges erfaßbar ist, d a d u r c h  g e k e n n -
z e i c h n e t ,   daß

a) das Sendesignal einerseits eine definierte Wellenform hat und

b) das Empfangssignal andererseits in Abhängigkeit von der Struktur des vorgegebenen Sendesignals einer n-fachen Aufsummierung des jeweils um einen vorgegebenen Betrag verschobenen Signals unterzogen wird.

2. Verfahren nach Anspruch 1, d a d u r c h  g e - k e n n z e i c h n e t ,   daß die Verschiebung ($\tau$) der Signale kleiner oder gleich der halben Signalperiode (T/2) des Sendesignals ist.

3. Verfahren nach Anspruch 2, d a d u r c h  g e - k e n n z e i c h n e t ,   daß die Verschiebung ($\tau$) der Signale T/12 beträgt.

4. Verfahren nach Anspruch 1, d a d u r c h  g e - k e n n z e i c h n e t ,   daß das Sendesignal ein solches Signal ist, dessen einfache zeitliche Integration einen unipolaren Impuls ergibt, beispielsweise ein einziger Sinus-Wellenzug.

5. Verfahren nach Anspruch 1, d a d u r c h   g e -
k e n n z e i c h n e t ,   daß das Sendesignal ein
solches Signal ist, dessen zweifache zeitliche Integration einen unipolaren Impuls ergibt, beispielsweise ein W-förmiger Wellenzug.

6. Verfahren nach Anspruch 1, d a d u r c h   g e -
k e n n z e i c h n e t ,   daß von den durch n-fache
Aufsummierung separierten Signalanteilen jeweils nur
ein Anteil hinsichtlich Amplitude und/oder Polarität
ausgewertet wird.

7. Verfahren nach Anspruch 1, d a d u r c h   g e -
k e n n z e i c h n e t ,   daß bei n-facher Aufsummierung die Teil-Summensignale einer weiteren Aufsummierung unterzogen werden.

8. Vorrichtung zur Durchführung des Verfahrens eines
der vorangehenden Ansprüche, mit einem von einem
Generator aktivierbaren Sende-/Empfangs-System für
Ultraschall, dem auf der Empfangsseite eine Auswerteschaltung zugeordnet ist, d a d u r c h   g e -
k e n n z e i c h n e t ,   daß die Auswerteschaltung wenigstens eine Einrichtung (15, 25, 35) zum
Aufsummieren von n um einen vorgegebenen Wert ($0 < \tau < T/2$)
gegeneinander verzögerten Echosignalen aufweist.

9. Vorrichtung nach Anspruch 8, insbesondere zur
Durchführung des Verfahrens einer der Ansprüche 4
oder 5, d a d u r c h   g e k e n n z e i c h -
n e t ,   daß der Generator (11, 21) eine solche Funktion
in Anpassung an das spezielle Ultraschall-Sende/Empfangs-
System (12, 22) generiert, die einen Schallimpuls
einer definierten Wellenform erzeugt.

10. Vorrichtung nach Anspruch 8, d a d u r c h  g e - k e n n z e i c h n e t , daß der Anzeigevorrichtung (16, 26) für das Ultraschall-Bild eine Einheit zur Diskriminierung des Betrages und der Polarität des aufbereiteten Echosignals vorgeschaltet ist.

11. Vorrichtung nach Anspruch 8, d a d u r c h  g e - k e n n z e i c h n e t , daß bei Vorliegen eines W-förmigen Wellenzuges als Sendeimpuls die Auswerteschaltung zwei hintereinandergeschaltete Summiereinrichtungen (25, 35) aufweist.

12. Vorrichtung nach Anspruch 8, d a d u r c h  g e - k e n n z e i c h n e t , daß die Einrichtung zum Aufsummieren der Signale für alternierende Tiefenbereiche im Wechselpufferbetrieb arbeitet, wozu zwei Summierleitungen (I, II) mittels Schalter (150, 160) abwechselnd umgeschaltet werden.

13. Vorrichtung nach Anspruch 12, d a d u r c h  g e - k e n n z e i c h n e t , daß die Summiereinrichtung (15) Mittel zur Berücksichtigung von Gleichanteilen der Signale enthalten.

14. Vorrichtung nach Anspruch 13, d a d u r c h  g e - k e n n z e i c h n e t , daß die Gleichanteile der Signale jeweils alternierend auf das Additionsglied (155, 255) der anderen Summierleitung (I, II) gegeben werden.

15. Vorrichtung nach Anspruch 12 und 13, d a d u r c h  g e k e n n z e i c h n e t , daß die Summiereinrichtung (15) Abschwächglieder (157, 257) zur Abschwächung störender Signalanteile enthält.

16. Vorrichtung nach Anspruch 8, d a d u r c h  g e - k e n n z e i c h n e t , daß die Summiereinrichtung (15, 25, 35) zur Addition von n Teilsummensignalen ausgelegt ist.

FIG 1a

FIG 1b

FIG 3

Sendesignal

T

Echoantwort

neg. Punktreflektor

=

T/2

+

FIG 2a

FIG 2b

FIG 4

FIG 5

FIG 6

FIG 8

81 P 5130

FIG 7

FIG 9